# EUROPEAN PATENT SPECIFICATION

(11) **EP 0 321 035 B1**
(45) Date of publication and mention of the grant of the patent: **21.04.1993**
(21) Application number: 88202832.7
(22) Date of filing: 09.12.1988
(51) Int. Cl.: C04B 24/16, E21B 33/13

(54) **Low-viscosity cement composition**
Zementzusammensetzung mit niedriger Viskosität
Composition cimentaire à viscosité faible

(30) Priority: 18.12.1987 IT 2309087
(43) Date of publication of application: 21.06.1989
(73) Proprietor: ENIRICERCHE S.p.A., 20121 Milano (IT); SNAMPROGETTI S.p.A., I-20121 Milan (IT)
(72) Inventor: Prevedello, Aldo, I-20097 San Donato Milanese Milan (IT); Romano, Goffredo, I-20097 San Donato Milanese Milan (IT)
(74) Representative: De Carli, Erberto

(56) References cited:
- EP-A- 0 341 791
- GB-A- 2 159 536
- CHEMICAL ABSTRACTS, vol. 78, 1973, page 207, abstract no. 7339m, Columbus, Ohio, US; & ZA-A-7 105 174 (KUREHA CHEMICAL INDUSTRY) 13-03-1972
- CHEMICAL ABSTRACTS, vol. 84, 1976, page 306, abstract no. 94607n, Columbus, Ohio, US; & JP-A-75 96 620 (NISSO CHEMICALS) 31-07-1975
- CHEMICAL ABSTRACTS, vol. 105, 1986, page 299, abstract no 65280x, Columbus, Ohio, US; F.A. BAIRAMOV et al.: "Effect of a superplasticizer with a high content of hydrophilic group on the hydration and hardening of cements", & TSEMENT 1986, (5), 14-15

## Description

The present invention relates to a low-viscosity cement composition, particularly useful for oil-well drilling. In oil-well drilling, cement compositions are used for cementing the bore-lining columns and sealing porous formations other than the oil-producing shales proper.

Cements of the kind referred to above have been classed by A.P.I. (American Petroleum Institute) as A, B, C, D, E, F, G and H according to their properties and uses.

Such cements undergo variable conditions as to temperature and pressure, consistently with the various depths within the boreholes, so that they require special rheological properties, such as fluidity, and pumping times consistent with the various conditions of use.

The prior art tendered several additives for cement or concrete compositions, to improve their processability and to to reduce their water content.

US-A-3 277 162 discloses an expensive additive based on a water soluble sulphonated salt of the reaction products of naphthalenesulphonic acid with formaldehyde, to be used, for decreasing the water losses of the cement compositions, especially whenever the composition concerned is under pressure in the vicinity of permeable formations, so that the request for cheaper addivitives is high.

Additives are requested, moreover, which can improve the rheological properties of a cement composition of the kind referred to above without, however, significantly affecting the pumpability times, so as to render the cement compositions in question more versatile in use.

C.A. 78 (1973) 73339m, abstracted from US-A-3 970 690, discloses a fluidity-improving additive prepared by sulphonating and neutralizing an aromatic mixture having a predominant structure with at least 3 fused aromatic rings and a molecular weight of from 500 to 2.000, and upholds the view that when the average molecular weight is below 500, the sulphonated pitch is a poor dispersant for cement and might even exhibit a foaming effect.

GB-A-2 159 536 discloses dispersants for concentrated coal/water slurries.

C.A. 84 (1976) 94047n discloses a sulphonation process (also with sulphur trioxide) of an aromatic substrate at a temperature below 20°C.

C.A.105 (1986) 65280x discloses sodium naphthalene sulphonate condensed with formaldehyde, the sulphonation being carried out with sulphuric acid. The product is intended to hydrate and harden cement rather than improving the rheological properties thereof.

To solve the problems posed by the prior art additives, the present invention provides an oil-well cement slurry composition comprising an oil-well cement, water and a fluidity-improving additive, characterized in that it contains, in an amount of from 2 to 6 parts by weight per 1.000 parts by weight of the oil-well cement, of a fluidity-improving additive consisting of a salt, selected from the alkali metal-, alkaline earth metal-and ammonium salts of the sulphonated and oxidized products obtained by reacting, at a temperature of from 90°C to 120°C, the fuel oil derived from steam cracking, with sulphur trioxide.

The fuel oil derived from steam cracking is the residual hydrocarbon fraction exiting the processes for producing ethylene and other lower olefins by thermally cracking mineral naphthas and gas oils.

Such hydrocarbon fractions exhibit a high content of aromatics, at least 50% whereof are bicyclic aromatics, in particular naphthalenes, according to the ASTM D-3239-81 standard.

The additives according to this invention are obtained by reacting either liquid, or gaseous, sulphur trioxide with the hydrocarbon phase, by operating with a mutual ratio of such reactants comprised within the range of from 0.4/1 to 2.5/1 by weight. In particular, the values near the lower limit of such a ratio should be preferably used.

The reaction is advantageously carried out by:
- dissolving the hydrocarbon fraction in an organic solvent inert towards the sulphonation reaction;
- placing the so-obtained solution into contact with either liquid or gaseous sulphur trioxide, complying with the above reported mutual ratios between the reactants;
- allowing the reaction to proceed at a temperature comprised within the range of from 90°C to 120°C for a time of from 0.5 to 3 hours, removing sulphur dioxide which evolves during the course of the reaction;
- neutralizing the reaction products, after cooling, with an alkali-metal or an alkali-earth metal basis or with ammonia, and preferably with aqueous sodium hydroxide:
- recovering the additive from the neutralization products by removing the organic solvent, and at least a portion of water.

For further details as to the sulphonation process, reference is made to EP-A-0 233 951.

In the treatment with sulphur trioxide, besides the sulphonation of the hydrocarbon fraction, also an oxidation effect takes place, as demonstrated by the sulphur dioxide which develops during the reaction. The additive obtained is in any case a solid, which contain a major portion of organic sulphonate, and minor amounts of alkali-metal, alkali-earth metal or ammonium sulphate, besides the possible residual moisture.

Such an additive is added to the cement compositions in amounts of the order of from 2 to 6 parts by weight, and preferably in amounts of the order of from 3 to 5 parts by weight, per each 1,000 parts by weight of cement. Preferably, A.P.I. cements are used.

The additive according to the present invention is cheap, owing to the raw materials used, and is obtained by means of a simple and cheap process. Furthermore, the same additive endows the cement compositions into which it is incorporated, with good rheological properties, in particular a good fluidity, without appreciably varying their pumpability times, even at high temperature and pressure values.

In the following experimental examples, two additives are used, and, in greater detail:
- - Additive "A":: obtained by sulphonating coal tar with sulphur trioxide, with a weight ratio of said sulphur trioxide to said cokery tar of 2/1, and neutralizing with sodium hydroxide the so-obtained sulphonation product: this additive is given for comparison

Such an additive has the following composition:

| | |
|---|---|
| - Organic sulphonate | 64.2 % by weight; |
| - Sodium sulphate | 30.8 % by weight; |
| - Water | 5.0 % by weight. |

- - Additive "B":: obtained by sulphonating steam cracking fuel oil with sulphur trioxide, with a weight ratio of said sulphur trioxide to said steam cracking fuel oil of 0.66/1, and neutralizing with sodium hydroxide the so-obtained sulphonation product.

Such an additive has the following composition:

| | |
|---|---|
| - Organic sulphonate | 79.7 % by weight; |
| - Sodium sulphate | 12.7 % by weight; |
| - Water | 7.6 % by weight. |

### Example 1 (Addive - free cement)

By operating according to American Petroleum Institute, A.P.I., Specifications for Materials and Testing for Well Cements (A.P.I. Spec. 10, Third Edition, July 7th, 1986, pages 14-15), a cement composition is prepared, which contains 1,000 parts by weight of A.P.I. "G" cement, and 440 parts by weight of fresh water.

On this composition, the rheological characteristics are determined by means of the FANN rotary viscometer, which are reported in Table 1, and the pumpability characteristics are determined as well, and are reported in Table 2.

### Example 2 (comparative)

A cement composition containing 1,000 parts by weight of A.P.I. "G" cement, 440 parts by weight of fresh water and 4.7 parts by weight of the "A" additive is prepared and characterized in the same way as disclosed in Example 1.

The results are reported in Tables 1 and 2.

### Example 3

A cement composition containing 1,000 parts by weight of A.P.I. "G" cement, 440 parts by weight of fresh water and 2.9 parts by weight of the "B" additive is prepared and tested as disclosed in Example 1.

The results are reported in Tables 1 and 2.

**Table 1**

| Rheological Characteristics | Example 1 | | Example 2 | | Example 3 | |
|---|---|---|---|---|---|---|
| Reading at 600 rpm | 107 | 95 | 84 | 71 | 50 | 50 |
| Reading at 300 rpm | 79 | 71 | 53 | 46 | 28 | 26 |
| Reading at 200 rpm | 69 | 60 | 42 | 39 | 20 | 21 |
| Reading at 100 rpm | 58 | 48 | 32 | 30 | 15 | 15 |
| Reading at 6 rpm | 26 | 18 | 18 | 20 | 9 | 11 |
| Reading at 3 rpm | 17 | 13 | 15 | 15 | 8 | 10 |
| K' g.sec.n/100 cm² | 5.04 | 3.64 | 4.90 | 5.15 | 2.62 | 3.64 |
| n' - | 0.33 | 0.37 | 0.27 | 0.24 | 0.27 | 0.21 |
| Test temperature (°C) | 27 | 52 | 27 | 52 | 27 | 52 |

**Table 2**

| Pumpability Characteristics | Example 1 | Example 2 | Example 3 |
|---|---|---|---|
| Pumpability time (minutes) | 119 | 140 | 135 |
| Test pressure (kPa) | 35,600 | 35,600 | 35,600 |
| Test temperature (°C) | 52 | 52 | 52 |

## Claims (Claims for the following Contracting State(s): AT, BE, CH, DE, FR, GB, GR, LI, LU, NL, SE)

1. An oil well cement slurry composition comprising an oil-well cement, water and a fluidity-improving additive, characterized in that it contains an amount of from 2 parts to 6 parts by weight per 1000 parts by weight of the oil-well cement, of a fluidity-improving additive consisting of a salt, selected from the alkali metal-, alkaline earth metal- and ammonium salts of the sulphonated and oxidized products obtained by reacting, at a temperature of from 90°C to 120°C, the fuel oil derived from steam cracking, with sulphur trioxide.

2. Oil-well cement slurry composition according to Claim 1, wherein the sulphonating and oxidizing reaction of the fuel oil derived from steam cracking, with sulphur trioxide is carried out at a weight ratio of sulphur trioxide to the product to be sulphonated and oxidized is from 0,4:1 to 2,5:1.

3. Oil-well cement slurry composition according to Claim 1, wherein the fluidity-improving additive is present in an amount of from 3 parts to 5 parts by weight per 1000 parts by weight of the oil-well cement.

## Claims (Claims for the following Contracting State(s): ES)

1. Process for preparing an oil-well cement slurry composition comprising an oil well cement, water and a fluidity-improving additive, characterized in that it comprises the step of combining with said oil-well cement and water an amount of from 2 parts to 6 parts by weight per 1000 parts by weight of the oil-well cement, of a fluidity-improving additive consisting of a salt, selected from the alkali metal-, alkaline earth metal- and ammonium salts of the sulphonated and oxidized reaction products obtained by reacting, at a temperature of from 90°C to 120°C, the fuel oil derived from steam cracking with sulphur trioxide.

2. Process according to Claim 1, characterized in that the sulphonating and oxidizing reaction of fuel oil derived from steam cracking, with sulphur trioxide is carried out at a weight ratio of sulphur trioxide to the product to be sulphonated and oxidized is from 0,4:1 to 2,5:1.

3. Process according to Claim 1, characterized in that the fluidity-improving additive is present in the slurry composition in an amount of from 3 parts to 5 parts by weight per 1000 parts by weight of the oil-well cement.

## Patentansprüche (Patentansprüche für folgende(n) Vertragsstaat(en): AT, BE, CH, DE, FR, GB, GR, LI, LU, NL, SE)

1. Zementaufschlämmungszusammensetzung für eine Ölbohrung, umfassend einen Ölbohrungszement, Wasser und ein das Fließvermögen verbesserndes Additiv, dadurch gekennzeichnet, daß sie je 1.000 Gewichtsteile des Ölbohrungszementes von 2 bis 6 Gewichtsteile eines die Fließfähigkeit verbessernden Additivs enthält, das aus einem unter den Alkalimetall-, Erdalkalimetall- und Ammoniumsalzen der sulfonierten und oxidierten Produkte ausgewählten Salz besteht, welche Produkte durch Umsetzen des vom Dampfcracken erhaltenen Heizöls mit Schwefeltrioxid bei einer Temperatur von 90°C bis 120°C erhalten worden sind.

2. Zementaufschlämmungszusammensetzung für eine Ölbohrung nach Anspruch 1, worin die Sulfonierungs- und Oxidierungsreaktion des vom Dampfcracken abgeleiteten Heizöls mit Schwefeltrioxid bei einem Gewichtsverhältnis von Schwefeltrioxid zu dem zu sulfonierenden und zu oxidierenden Produkt von 0,4:1 bis 2,5:1 ausgeführt wird.

3. Zementaufschlämmungszusammensetzung für eine Ölbohrung nach Anspruch 1, worin das das Fließvermögen verbessernde Additiv in einer Menge von 3 bis 5 Gewichtsteilen je 1.000 Gewichtsteile des Ölbohrungszements vorliegt.

## Patentansprüche (Patentansprüche für folgende(n) Vertragsstaat(en): ES)

1. Verfahren zur Herstellung einer Zementaufschlämmung für eine Ölbohrung, welche Zusammensetzung einen Ölbohrungszement, Wasser und ein das Fließvermögen verbesserndes Additiv umfaßt, dadurch gekennzeichnet, daß das Verfahren die Stufe des Vereinigens des genannten Ölbohrungszementes und des Wassers mit einer Menge von 2 bis 6 Gewichtsteilen eines das Fließvermögen verbessernden Additivs je 1.000 Gewichtsteile des Ölbohrungszementes umfaßt, welches Additiv aus einem unter den Alkalimetall-, Erdalkalimetall- und Ammoniumsalzen der sulfonierten und oxidierten Reaktionsprodukte ausgewählten Salz besteht, welche Produkte durch Umsetzen des vom Dampfcracken abgeleiteten Heizöls mit Schwefeltrioxid bei einer Temperatur von 90°C bis 120°C erhalten worden sind.

2. Verfahren nach Anspruch 1, dadurch gekennzeichnet, daß die Sulfonierungs-und Oxidierungsreaktion des vom Dampfcracken abgeleiteten Heizöls mit Schwefeltrioxid bei einem Gewichtsverhältnis von Schwefeltrioxid zu dem zu sulfonierenden und zu oxidierenden Produkt von 0,4:1 bis 2,5:1 ausgeführt wird.

3. Verfahren nach Anspruch 1, dadurch gekennzeichnet, daß das das Fließvermögen verbessernde Additiv in der Aufschlämmung in einer Menge von 3 bis 5 Gewichtsteilen je 1.000 Gewichtsteile des Ölbohrungszements vorliegt.

## Revendications (Revendications pour l'(les) Etat(s) contractant(s) suivant(s): AT, BE, CH, DE, FR, GB, GR, LI, LU, NL, SE)

1. Composition de suspension de ciment pour puits de pétrole, comprenant un ciment pour puits de pétrole, de l'eau et un additif améliorant la fluidité, caractérisée par le fait qu'elle contient une quantité allant de 2 parties à 6 parties en poids pour 1000 parties en poids de ciment pour puits de pétrole, un additif améliorant la fluidité, consitué d'un sel choisi parmi les sels alcalins, alcatino-terreux et d'ammonium, de produits sulfonés et oxydés, obtenus par réaction, à une température de 90 à 120°C, d'une huile de combustible obtenue par craquage à la vapeur d'eau, avec le trioxyde de soufre.

2. Composition de suspension, de ciment pour puits de pétrole selon la revendication 1, où la réaction de sulfonation et d'oxydation de l'huile de combustible dérivée du craquage par la vapeur d'eau, avec le trioxyde soufre, est mise en oeuvre à un rapport en poids du trioxyde de soufre par rapport au produit à sulfoner et à oxyder de 0,4 : 1 à 2,5 : 1.

3. Composition de suspension de ciment pour puits de pétrole selon la revendication 1, où l'additif améliorant la fluidité est présent en une quantité allant de 3 parties à 5 parties en poids pour 1000 parties en poids de ciment pour puits de pétrole.

## Revendications (Revendications pour l'(les) Etat(s) contractant(s) suivant(s): ES)

1. Procédé de préparation d'une composition de ciment pour puits de pétrole comprenant un ciment pour puits de pétrole, de l'eau et un additif améliorant la fluidité, caractérisé par le fait qu'il comprend l'étape consistant à combiner avec le ciment pour puits de pétrole et l'eau, une quantité allant de 2 parties à 6 parties en poids, pour 1000 parties en poids de ciment pour puits de pétrole, d'un additif améliorant la fluidité, constitué d'un sel choisi parmi les sels alcalins, alcalino-terreux et d'ammonium de produits de réactions sulfonés et oxydés, obtenus en faisant réagir, à une température de 90 à 120°C l'huile combustible obtenue par craquage à la vapeur d'eau, avec du trioxyde de soufre.

2. Procédé selon la revendication 1, caractérisé par le fait que la réaction de sulfonation et d'oxydation de l'huile combustible dérivée du craquage à la vapeur d'eau, avec le trioxyde de soufre, est mise ne oeuvre avec un rapport en poids du trioxyde de soufre aux produits à sulfoner et à oxyder, de 0,4 : 1 à 2,5 : 1.

3. Procédé selon la revendication 1, caractérisé par le fait que l'additif améliorant la fluidité est présent dans la composition de suspension, en une quantité allant de 3 parties à 5 parties en poids pour 1000 parties en poids de ciment pour puits de pétrole.
